# EUROPEAN PATENT APPLICATION

(11) **EP 3 968 261 A1**
(43) Date of publication of application: **16.03.2022**
(21) Application number: 20802330.9
(22) Date of filing: 31.03.2020
(51) Int. Cl.: G06Q 40/04

(54) **STOCK TRANSACTION INFORMATION DISPLAY PROGRAM AND SYSTEM**

(30) Priority: 06.05.2019 JP 2019087242
(71) Applicant: Assest Corporation, Kashiwa-shi, Chiba, 277-0871 (JP)
(72) Inventor: SAWADA Ayako, Kashiwa-shi, Chiba 277-0871 (JP)
(74) Representative: Rings, Rolf
(86) International application number: PCT/JP2020/014853
(87) International publication number: WO 2020/226004

(57) **Abstract**

A stock exchange information display program for displaying information about a stock in stock exchange causes a computer to execute: an information acquisition step of acquiring market condition information about a market condition in a period of time when stock exchange is to be newly executed; and a display step of using a degree of association between reference market condition information about past market conditions acquired in advance and gain or loss data on a share price of each stock at a later time point relative to in the past market conditions, the degree of association being represented in three or more levels, so as to preferentially display gain or loss data on a share price of each stock having a higher degree of association between the reference market condition information corresponding to the market condition information acquired at the information acquisition step and the gain or loss data on the share price of each stock, the degree of association being represented in three or more levels.

## Description

### [Technical Field]

The present invention relates to a program and a system for displaying stock exchange information to provide an advice on a stock in stock exchange.

### [Background Art]

In recent years, applications that provide various advice on stock exchanges and systems that automate stock exchanges, that is, perform automatic trading have been used. For the use of such applications or systems, an advice based on analysis using a huge amount of data helps to increase the winning rate, so that increased profits can be expected. However, even if such a huge amount of data can be acquired, it takes considerable effort to analyze the data to derive an output solution for providing an accurate advice to the user. In addition, there is not currently proposed any system capable of automatically performing such operations yet.

### [Summary of Invention]

### [Technical Problem]

Therefore, the present invention has been devised in view of the above-mentioned problems, and an object of the present invention is to provide a program and a system for displaying stock exchange information, which can acquire a huge amount of data and analyze the data to derive an output solution for providing an accurate advice to the user by a stock exchange advice program for providing an advice on a stock in stock exchange.

### [Solution to Problem]

In order to solve the above-mentioned problems, a stock exchange information display program according to the present invention is for displaying information about a stock in stock exchange. The stock exchange information display program causes a computer to execute: an information acquisition step of acquiring market condition information about a market condition in a period of time when stock exchange is to be newly executed; and a display step of using a degree of association between reference market condition information about past market conditions acquired in advance and gain or loss data on a share price of each stock at a later time point relative to in the past market conditions, the degree of association being represented in three or more levels, so as to preferentially display gain or loss data on a share price of each stock having a higher degree of association between the reference market condition information corresponding to the market condition information acquired at the information acquisition step and the gain or loss data on the share price of each stock, the degree of association being represented in three or more levels.

A stock exchange information display system according to the present invention is for displaying information about a stock in stock exchange. The stock exchange information display system includes: an information acquisition unit that acquires market condition information about a market condition in a period of time when stock exchange is to be newly executed; and a display unit that uses a degree of association between reference market condition information about past market conditions acquired in advance and gain or loss data on a share price of each stock at a later time point relative to in the past market conditions, the degree of association being represented in three or more levels, so as to preferentially display gain or loss data on a share price of each stock having a higher degree of association between the reference market condition information corresponding to the market condition information acquired by the information acquisition unit and the gain or loss data on the share price of each stock, the degree of association being represented in three or more levels.

### [Advantageous Effects of Invention]

It is possible to automatically obtain an advice on stock exchange about management problem and issue that a customer wants to solve by artificial intelligence even without requiring special skills or experiences.

### [Brief Description of Drawings]

[Fig. 1]

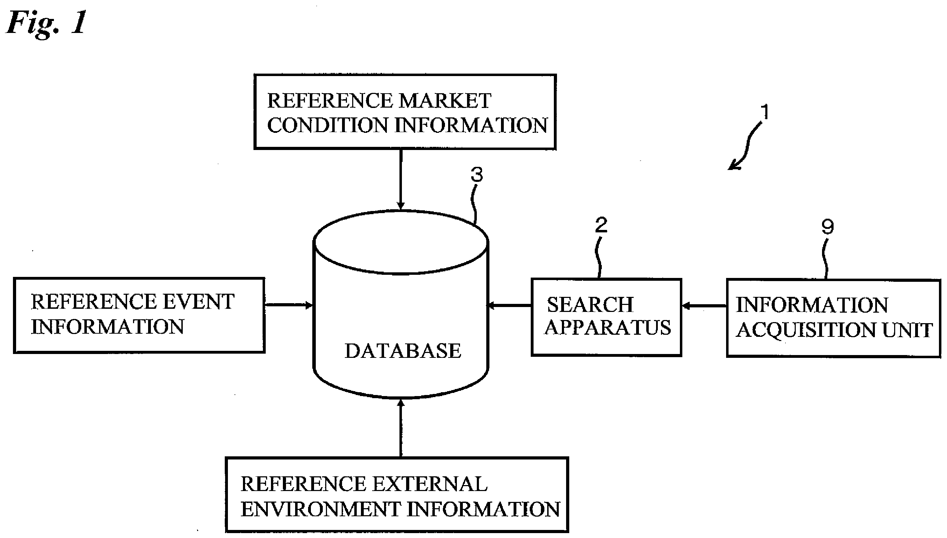

   Fig. 1 is a block diagram illustrating the whole configuration of a stock exchange information display system to which the present invention is applied.
[Fig. 2]

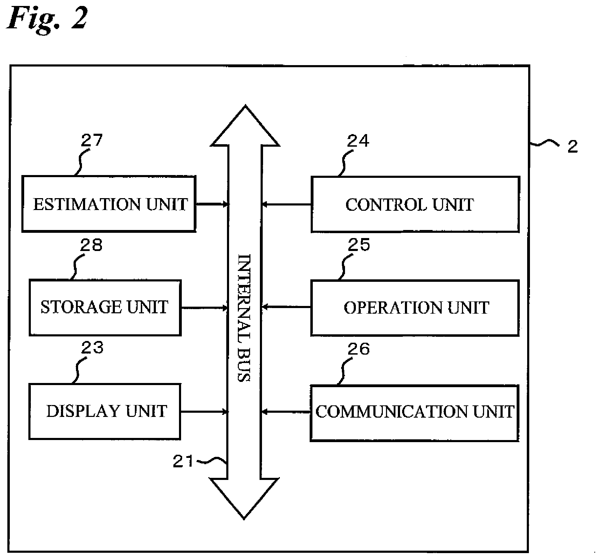

   Fig. 2 is a diagram illustrating a specific configuration example of a search apparatus.
[Fig. 3]

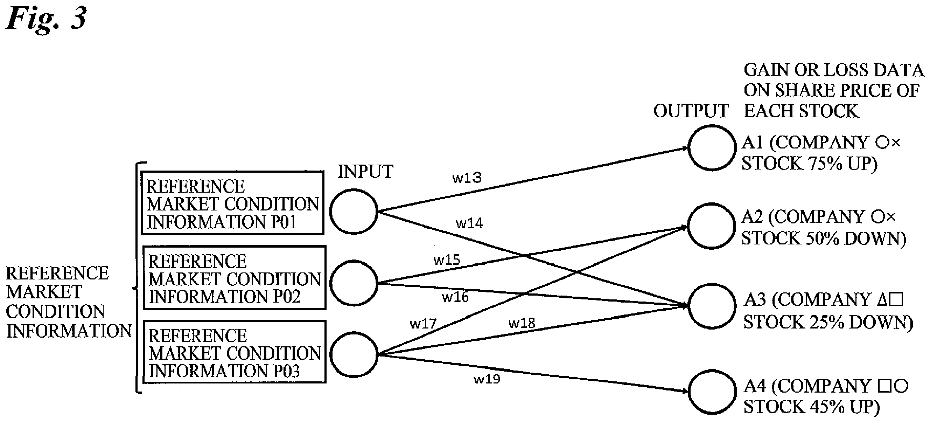

   Fig. 3 illustrates an example in which three or more levels of degrees of association between reference market condition information and gain or loss data on share prices of stocks are set in advance.
[Fig. 4]

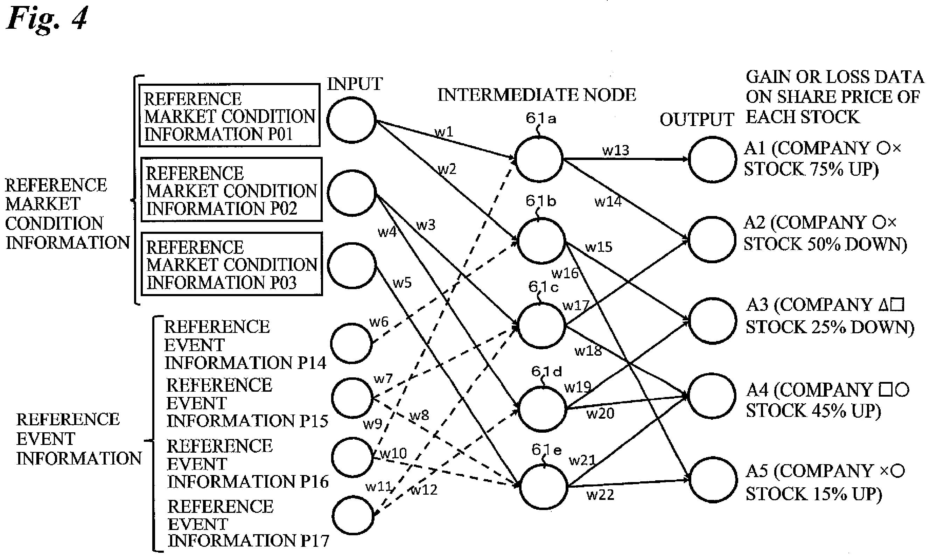

   Fig. 4 illustrates an example in which degrees of association of combinations of the reference market condition information and reference event information are set in advance.
[Fig. 5]

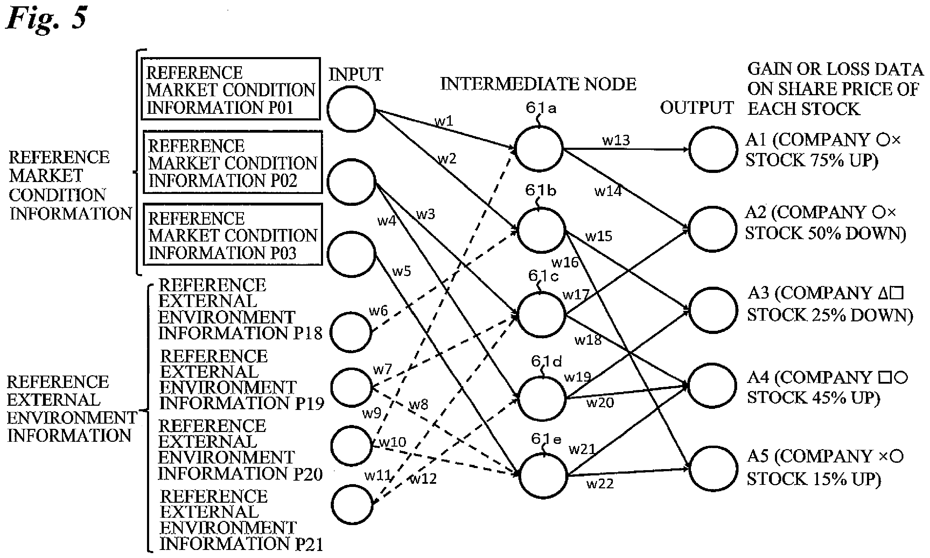

   Fig. 5 illustrates an example in which degrees of association of combinations of the reference market condition information and reference external environment information are set in advance.
[Fig. 6]

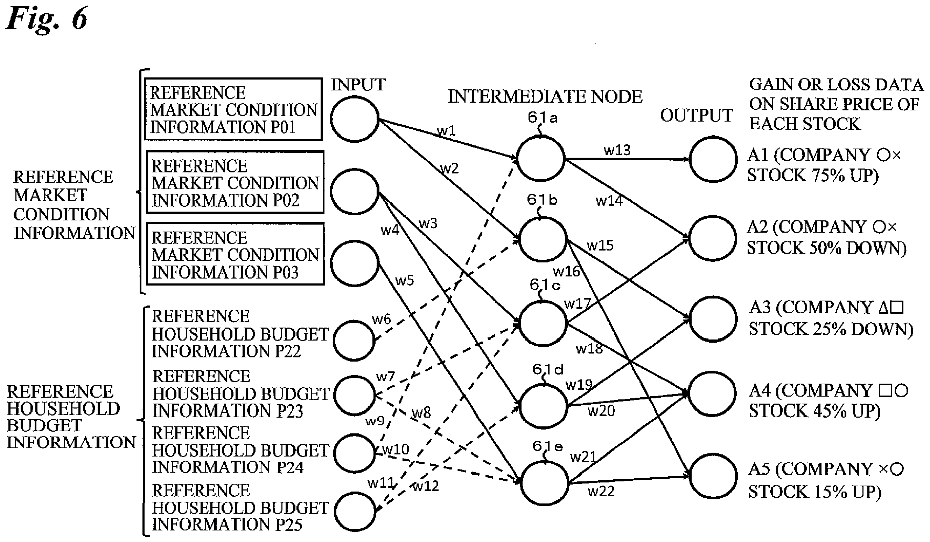

   Fig. 6 illustrates an example in which degrees of association of combinations of the reference market condition information and reference household budget information are set in advance.
[Fig. 7]

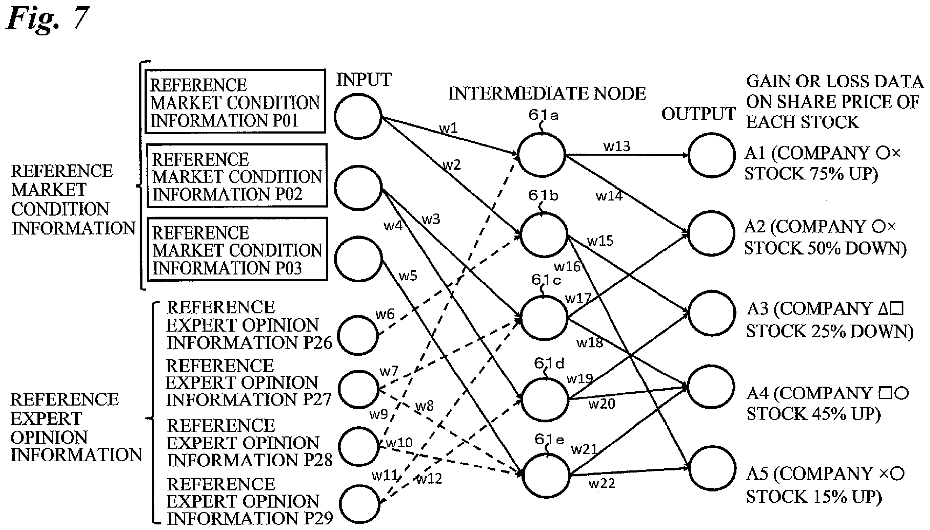

   Fig. 7 illustrates an example in which degrees of association of combinations of the reference market condition information and reference expert opinion information are set in advance.
[Fig. 8]

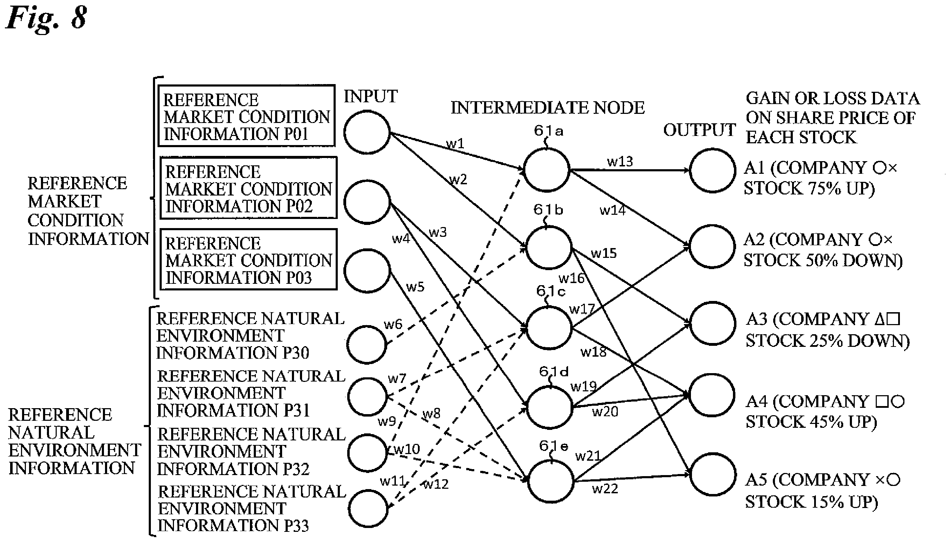

   Fig. 8 illustrates an example in which degrees of association of combinations of the reference market condition information and reference natural environment information are set in advance.
[Fig. 9]

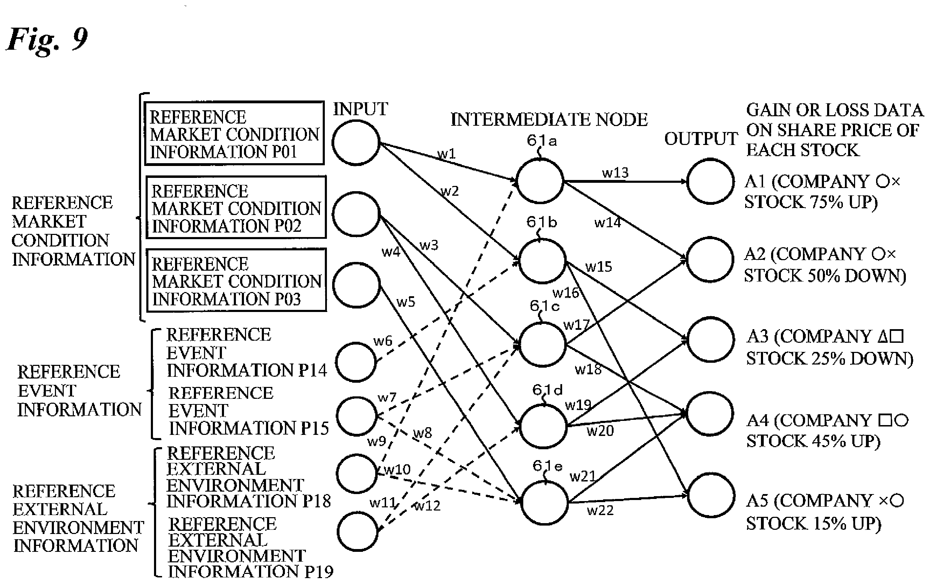

   Fig. 9 illustrates an example in which degrees of association for combinations of three types of reference information are set in advance.
[Fig. 10]

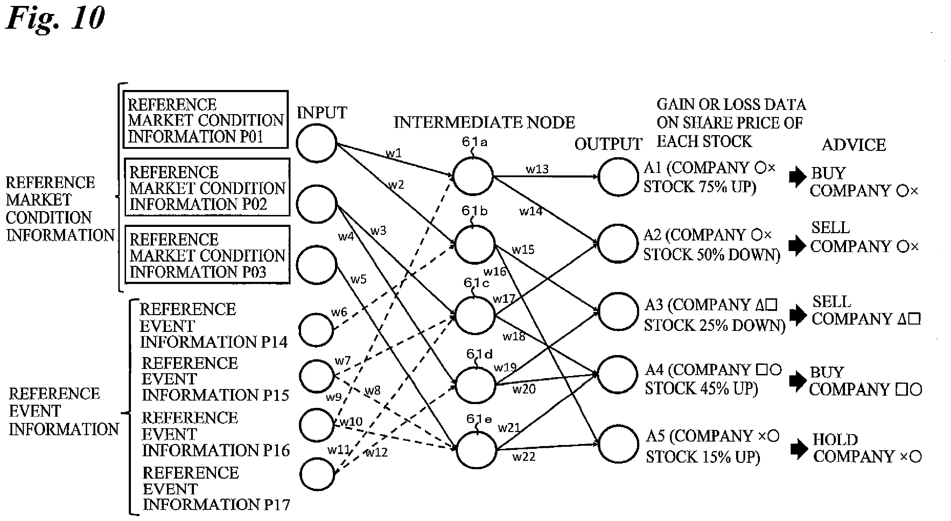

   Fig. 10 illustrates an example in which an advice is given in addition to gain or loss data on a share price.
[Fig. 11]

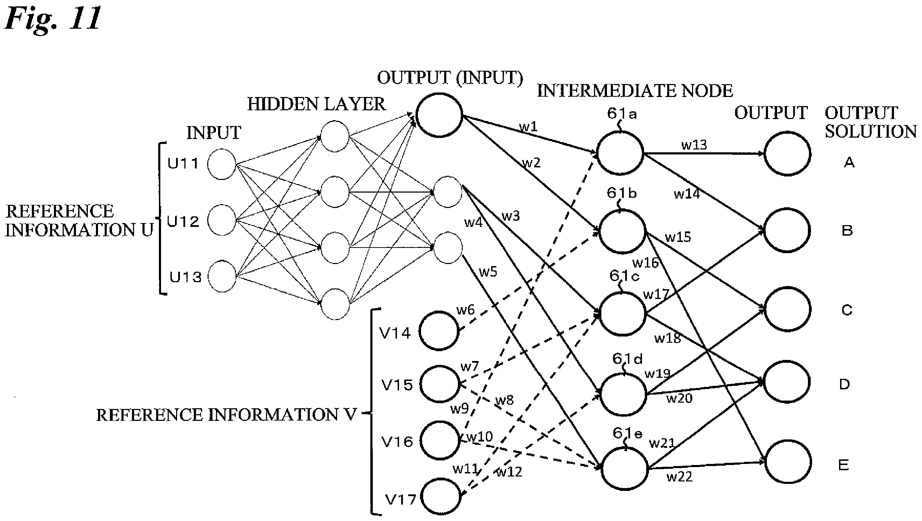

   Fig. 11 is a diagram illustrating another variation in which degrees of association are made.
[Fig. 12]

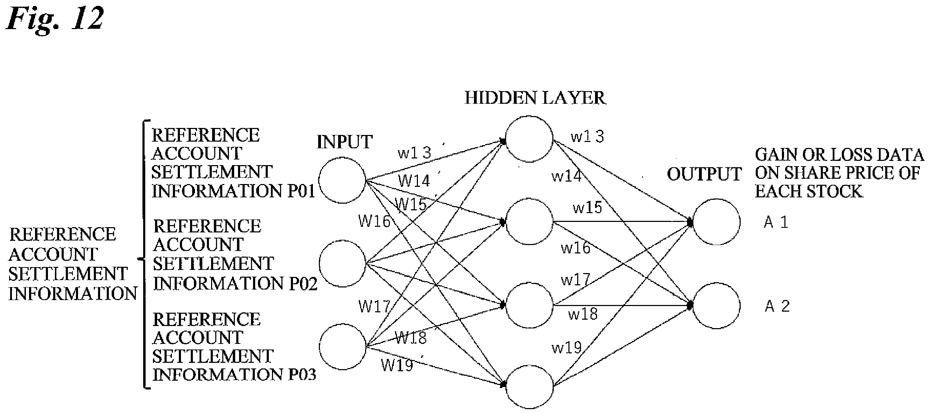

   Fig. 12 illustrates an example in which degrees of association are made by nodes of an artificial intelligence neural network.

### [Description of Embodiments]

Hereinafter, a stock exchange advice program to which the present invention is applied will be described in detail with reference to the drawings.

Fig. 1 is a block diagram illustrating the whole configuration of a stock exchange information display system 1 in which a stock exchange advice program to which the present invention is applied is implemented. The stock exchange information display system 1 includes an information acquisition unit 9, a search apparatus 2 connected to the information acquisition unit 9, and a database 3 connected to the search apparatus 2.

The information acquisition unit 9 is a device for a person who uses this system to input various commands and information, and specifically, includes a keyboard, buttons, a touch panel, a mouse, switches, and the like. The information acquisition unit 9 is not limited to a device for inputting text information, and may include a device such as a microphone that can detect voice and convert it into text information. Further, the information acquisition unit 9 may be configured as an image capturing device capable of capturing an image, such as a camera. The information acquisition unit 9 may include a scanner having a function of recognizing a character string from a paperbased document. Further, the information acquisition unit 9 may be integrated with the search apparatus 2 described later. The information acquisition unit 9 outputs the detected information to the search apparatus 2. The information acquisition unit 9 may also include means for retrieving position information by scanning map information. The information acquisition unit 9 also includes a temperature sensor, a humidity sensor, a flow rate sensor, and other sensors capable of identifying substances and physical properties. The information acquisition unit 9 may include means for automatically fetching character strings and data posted on an internet site.

The database 3 stores various information necessary for providing an advice on stock exchange. Stored as the information necessary for providing an advice on stock exchange are data sets of reference market condition information about past market conditions, reference event information that reflects events occurred in a detection period of the past market conditions, reference external environment information that reflects external environment in the detection period of the past market conditions, reference household budget information that reflects statistical data about household budgets in the detection period of the past market conditions, reference real estate information that reflects statistical data about real estates in the detection period of the past market conditions, reference expert opinion information that reflects opinions of experts announced in the detection period of the past market conditions, and reference natural environment information that reflects information on natural environment in the detection period of the past market conditions, and their associated gain or loss data on a share price of each stock in the past market conditions.

In other words, in addition to such reference market condition information, any one or more of the reference event information, the reference external environment information, the reference household budget information, the reference real estate information, the reference expert opinion information, and the reference natural environment information are associated with the gain or loss data on a share price of each stock in the past market conditions, and these are stored with this association in the database 3.

The search apparatus 2 includes, for example, an electronic device such as a personal computer (PC), but may be embodied as any other electronic device such as a mobile phone, a smartphone, a tablet terminal, and a wearable terminal, instead of the PC. The search apparatus 2 allows a user to obtain a search solution.

Fig. 2 illustrates a specific configuration example of the search apparatus 2. The search apparatus 2 includes a control unit 24 for controlling the entire search apparatus 2, an operation unit 25 for inputting various control instructions via operation buttons, a keyboard, or the like, a communication unit 26 for performing wired communication or wireless communication, an estimation unit 27 for making various assessments, and a storage unit 28 for storing a program for performing a search to be executed, typified by a hard disk, which are all connected to an internal bus 21. In addition, a display unit 23, which serves as a monitor that actually displays information, is connected to the internal bus 21.

The control unit 24 is a so-called central control unit for controlling each component mounted in the search apparatus 2 by transmitting a control signal to the component via the internal bus 21. Further, the control unit 24 transmits various control instructions via the internal bus 21 in response to operations through the operation unit 25.

The operation unit 25 is embodied by a keyboard or a touch panel, and an execution instruction for executing a program is input from the user. When the execution instruction is input by the user, this operation unit 25 notifies the control unit 24 of the execution instruction. In response to receiving this notification, the control unit 24 executes a desired processing operation in cooperation with the components including the estimation unit 27. This operation unit 25 may be embodied as the information acquisition unit 9 described above.

The estimation unit 27 estimates a search solution. In executing an estimation operation, the estimation unit 27 reads out various information stored in the storage unit 28 and various information stored in the database 3 as necessary information. This estimation unit 27 may be controlled by artificial intelligence. This artificial intelligence may be based on any well-known artificial intelligence technique.

The display unit 23 includes a graphic controller that creates a display image based on the control by the control unit 24. The display unit 23 is realized by, for example, a liquid crystal display (LCD) or the like.

In the case where the storage unit 28 is composed of a hard disk, predetermined information is written to a corresponding address in the storage unit 28, and is read out from the storage unit 28 as needed, based on the control by the control unit 24. Further, the storage unit 28 stores a program for executing the present invention. This program is read and executed by the control unit 24.

The operation of the stock exchange information display system 1 having the above-described configuration will be described.

In the stock exchange information display system 1, for example, it is assumed that three or more levels of degrees of association between the reference market condition information and gain or loss data on share prices of stocks are set in advance and acquired as illustrated in Fig. 3. The reference market condition information is various information about market conditions. Examples of this reference market condition information include price movements of interest rates, foreign exchange, share prices of stocks, crude oil, futures, precious metals, Bitcoin, and the like. This reference market condition information may be displayed as a time-series chart, a line graph, or the like for these targets. Further, information such as Bollinger band, MACD, and moving average line may be appended. In addition, this market condition information may include fundamental indicators of the company of each stock, and may also include indicators such as PER (price earnings ratio), PBR (price-to-book value ratio), and ROE (return on equity) as well as annual sales, profits, and costs. For foreign exchange, information such as a chart illustrating price movements between currencies, Bollinger Bands, MACDs, and moving average lines may be appended.

The share price gain or loss data on each stock is data indicating how much the share price of each stock has increased or decreased at a time point after the reference market condition information was acquired. This gain or loss data may be counted by a range of the actual increase or decrease price, or may be represented by an increase or decrease rate. This gain or loss data is represented by a gain or loss in a share price at a measurement time point (later time point) relative to the share price at the previous time point (i.e., the time point when the reference market condition information was acquired). The previous time point referred to here may be defined with any period of time with respect to the measurement time point, such as 10 seconds before, 1 minute before, 30 minutes before, 1 hour before, 4 hours before, 1 day before, 10 days before, 1 month before, 1 year before, 5 years before, with respect to the measurement time point. In other words, if the measurement time point is set as a certain point in a chart, the gain or loss data on a share price indicates an increase or decrease in the share price at the measurement time point relative to the share price at the previous time point. Alternatively, the gain or loss data on a share price may represent a so-called candlestick in a stock chart.

In other words, a data set of this reference market condition information and the gain or loss data on the share price makes it possible to see how the share price increased or decreased at a time point after any technical event that occurred in the reference market condition information (e.g., a case where the upper shadow during temporary highs, in which the chart has risen for three consecutive days, appears on the chart). In other words, the data set is the resulting increase or decrease in a share price relative to a technical event. Therefore, collecting data sets of reference market condition information and gain or loss data on share prices makes it possible to know how the share price has increased or decreased at a time point after what kind of market condition occurred in the past.

In the example of Fig. 3, it is assumed that the input data is, for example, reference market condition information P01 to P03. Such pieces of reference market condition information as the input data are linked to the outputs. For each output, gain or loss data on a share price as an output solution is represented.

The pieces of reference market condition information are associated with gain or loss data on share prices serving as their output solutions through three or more levels of degrees of association. The reference market condition information is arranged on the left side with respect to the degrees of association, and the gain or loss data on each share price is arranged on the right side with respect to the degrees of association. The degree of association indicates which of the gain or loss data on share prices has high association with the reference market condition information, which is arranged on the left side. In other words, this degree of association is an index indicating what gain or loss data on a share price is likely to be associated with each piece of reference market condition information, and also indicates the accuracy in selecting the most probable gain or loss data on the share price from the reference market condition information. In the example of Fig. 3, w13 to w19 are illustrated as the degrees of association. These w13 to w19 are represented in 10 levels as listed in Table 1 below, in which the closer to 10 points, the higher the degree of association between the corresponding combination as an intermediate node and the corresponding gain or loss data on the share price as an output; on the contrary, the closer to 1 point, the lower the degree of association between the corresponding combination as an intermediate node and the corresponding gain or loss data on the share price as an output.

**[Table 1]**

| Symbol | Degree of association |
|---|---|
| w13 | 7 |
| w14 | 2 |
| w15 | 9 |
| w16 | 5 |
| w17 | 2 |
| w18 | 1 |
| w19 | 8 |
| w20 | 6 |
| w21 | 10 |
| w22 | 3 |

The search apparatus 2 acquires in advance such degrees of association w13 to w19 in three or more levels illustrated in Fig. 3. Specifically, in assessing the actual search solution, the search apparatus 2 accumulates the past data on the reference market condition information, and which of the gain or loss data on share prices was used for that information, analyzes and examines them, and thus makes the degrees of association illustrated in Fig. 3 in advance.

For example, it is assumed that certain reference market condition information is at the time when the preceding MACD passes the lagging moving average (SIGNAL) from down to up in the stock chart of a certain stock. Under such a market condition, it is assumed that there are a large number of stocks with share prices that have been up by 30% at a later time point. In such a case, the degree of association for the stock's share price up 30% becomes strong. On the other hand, in exactly the same market condition, it is assumed that there are a large number of stocks with share prices that have been down by 25% and there are a small number of stocks with share prices that have been up by 30% at a later time point. In such a case, the degree of association for the stock's share price down 25% becomes strong and the degree of association for the stock's share price up 30% becomes low.

The analyzing and examining may be performed by artificial intelligence. In such a case, for example, for the reference market condition information P01, analysis is performed from the past price movement data of the share prices of stocks. This may be extracted from, for example, electronic data of past stock charts. For the reference market condition information P01, if there are many cases of gain or loss data A1 on the share price of a stock (company o× stock 75% up), the degree of association that leads to this gain or loss data A1 is set higher, and if there are many cases of gain or loss data A3 (company △□ stock 25% down), the degree of association that leads to this gain or loss data A3 is set higher. For example, for the example of the reference market condition information P01, it is linked to the gain or loss data A1 and gain or loss data A3, and from the previous cases, the degree of association of w13, which leads to the gain or loss data A1, is set to 7 points, and the degree of association of w14, which leads to the gain or loss data A3, is set to 2 points.

Further, the degrees of association illustrated in Fig. 3 may be those between nodes of an artificial intelligence-based neural network. Specifically, the weighting coefficients for the outputs of the nodes of this neural network corresponds to the above-mentioned degrees of association. Further, the network is not limited to the neural network, and may be of all decision-making factors constituting artificial intelligence.

Such degrees of association are what is called learned data in artificial intelligence. After such learned data is created, when a new advice on a stock in stock exchange is actually provided to a customer from now on, an increase or decrease in the share price will be predicted by using the above learned data. In such a case, market condition information about a market condition in a period of time when stock exchange is to be actually newly executed is acquired. This market condition information is composed of the same type of data as the above-mentioned reference market condition information.

The acquired new market condition information is input by the information acquisition unit 9 described above. The information acquisition unit 9 may acquire charts, price movement data, and the like as electronic data.

Based on the new market condition information acquired in this way, for that market condition information, a future share price (i.e., gain or loss data on the future share price) that is likely to occur is actually predicted. In such a case, the degrees of association illustrated in Fig. 3 (Table 1) acquired in advance is referred to. For example, if the acquired new market condition information is the same as or similar to P02, it is associated with gain or loss data A2 by the degree of association w15 and with the gain or loss data A3 by the degree of association w16. In such a case, the gain or loss data A2 with the highest degree of association is selected as the optimum solution. However, it is not essential to select the one with the highest degree of association as the optimum solution, and the gain or loss data A3, which has the lower degree of association but whose association is recognized, may be selected as the optimum solution. Instead of this, it goes without saying that an output solution to which no arrow is connected may be selected, and any other output solution may be selected in any other priority as long as it is based on any degree of association.

In this way, it is possible to search for the condition of the share price of each stock that may occur in the future from the acquired new market condition information through the gain or loss data on the share price and display the resulting condition of the share price to the user (consultant). The user (consultant), who sees the search result, can obtain a guideline for the stock to be bought and sold based on the retrieved gain or loss data on the share price. It is possible to provide a useful advice to the user just by showing the search result of the gain or loss data on the share price. Incidentally, in making this advice, instead of or in addition to simply displaying the retrieved gain or loss data on the share price, an advice may be provided including display of which and how much stock is to be bought or sold specifically, based on this gain or loss data.

In an example of Fig. 4, it is assumed that, as input data, the reference market condition information P01 to P03 and reference event information P14 to 17 are used, for example. As such input data, intermediate nodes illustrated in Fig. 4 are combinations of the reference market condition information and the reference event information. Each intermediate node is further linked to outputs. For each output, gain or loss data on the share price of each stock as an output solution is represented.

In the example of Fig. 4, it is assumed that combinations of the reference market condition information and the reference event information have been made. The reference event information is a concept that includes various social news, events, incidents, celebrations, auspicious events, and the like, which occurred domestically or overseas, as well as news, events, incidents, celebrations, auspicious events, and the like, which occurred in companies. This reference event information can be obtained from blogs, analyst reports, securities reports, advertisements, press releases, news articles, and the like, which are related to companies or the entire society. These pieces of reference event information may be extracted from news articles by text mining which parses character strings, modification, or the like.

In an example of Fig. 4, it is assumed that, as input data, the reference market condition information P01 to P03 and reference event information P14 to 17 are used, for example. As such input data, intermediate nodes illustrated in Fig. 4 are combinations of the reference market condition information and the reference event information. Each intermediate node is further linked to outputs. For each output, gain or loss data on the share price of each stock as an output solution is represented.

The combinations (intermediate node) of the reference market condition information and the reference event information are associated with each other through three or more levels of degrees of association for gain or loss data on share prices of stocks, as the output solutions. The reference market condition information and the reference event information are arranged on the left side with respect to the degrees of association, and gain or loss data on share prices of stocks are arranged on the right side with respect to the degrees of association. The degree of association indicates which of the gain or loss data on share prices of stocks has high association with the reference market condition information and the reference event information, which are arranged on the left side. In other words, this degree of association is an index indicating what gain or loss data on the share price of a stock is likely to be associated with each piece of reference market condition information and reference event information, and also indicates the accuracy in selecting the most probable gain or loss data on the share price of a stock from the reference market condition information and the reference event information. The gain or loss data on the share price of each stock at a later time point will differ depending on various events that actually occurred in the entire society or companies, in addition to the market condition data. Therefore, the optimum gain or loss data on the share price of a stock will be searched for based on the combinations of the reference market condition information and the reference event information.

In the example of Fig. 4, w13 to w22 are illustrated as the degrees of association. These w13 to w22 are represented in 10 levels as listed in Table 1 in which the closer to 10 points, the higher the degree of association between the corresponding combination as an intermediate node and the corresponding output; on the contrary, the closer to 1 point, the lower the degree of association between the corresponding combination as an intermediate node and the corresponding output.

The search apparatus 2 acquires in advance such degrees of association w13 to w22 in three or more levels illustrated in Fig. 4. Specifically, in assessing the actual search solution, the search apparatus 2 accumulates the past data on the reference market condition information and the reference event information, and which of the gain or loss data on share prices of stocks was suitable for these pieces of information, analyzes and examines them, and thus makes the degrees of association illustrated in Fig. 4 in advance.

The analyzing and examining may be performed by artificial intelligence. In such a case, for example, for the reference market condition information P01 and the reference event information P16, analysis is performed on the gain or loss data on share prices of stocks from the past data. If there are many cases where the gain or loss data on the share price of a stock is the gain or loss data A1 (company ∘× stock 75% up), the degree of association that leads to this gain or loss data A1 is set higher, and if there are many cases of the gain or loss data A2 (company ∘× stock 50% down) and there are a few cases of the gain or loss data A1, the degree of association that leads to the gain or loss data A2 is set higher and the degree of association that leads to the gain or loss data A1 is set lower. For example, for an example of intermediate node 61a, it is linked to the outputs of the gain or loss data A1 and gain or loss data A2, and from the previous cases, the degree of association of w13, which leads to the gain or loss data A1, is set to 7 points, and the degree of association of w14, which leads to the gain or loss data A2, is set to 2 points.

Further, the degrees of association illustrated in Fig. 4 may be those between nodes of an artificial intelligence-based neural network. Specifically, the weighting coefficients for the outputs of the nodes of this neural network corresponds to the above-mentioned degrees of association. Further, the network is not limited to the neural network, and may be of all decision-making factors constituting artificial intelligence.

In the example of the degrees of association illustrated in Fig. 4, a node 61b is a node in which the reference event information P14 is combined with the reference market condition information P01 and for which the degree of association for the gain or loss data A3 is w15 and the degree of association for gain or loss data A5 is w16. A node 61c is a node in which the reference event information P15 and P17 are combined with the reference market condition information P02 and for which the degree of association for the gain or loss data A2 is w17 and the degree of association for gain or loss data A4 is w18.

Such degrees of association are what is called learned data in artificial intelligence. After such learned data is created, when a search for gain or loss data for an advice on stock exchange is actually performed from now on, the above learned data will be used. In such a case, market condition information about a market condition in a period of time when stock exchange is to be newly executed is acquired, and event information that reflects events that occurred in the period of time when stock exchange is to be newly executed is also acquired. This event information corresponds to the above-mentioned reference event information, and data such as, for example, news, newspapers, and blogs may be fetched or directly received as an input.

Based on the new market condition information and event information acquired in this way, the optimum gain or loss data on the share price of a stock is searched for. In such a case, the degrees of association illustrated in Fig. 4 (Table 1) acquired in advance is referred to. For example, in the case where the acquired new market condition information is the same as or similar to P02 and the event information is P17, a node 61d is associated through the degrees of association, and this node 61d is associated with the gain or loss data A3 by w19 and with the gain or loss data A4 by the degree of association w20. In such a case, the gain or loss data A3 with the highest degree of association is selected as the optimum solution. However, it is not essential to select the one with the highest degree of association as the optimum solution, and the gain or loss data A4, which has the lower degree of association but whose association is recognized, may be selected as the optimum solution. Instead of this, it goes without saying that an output solution to which no arrow is connected may be selected, and any other output solution may be selected in any other priority as long as it is based on any degree of association.

Further, Table 2 below provides examples of degrees of association w1 to w12 extending from the inputs.

**[Table 2]**

| Symbol | Degree of association |
|---|---|
| w1 | 8 |
| w2 | 1 |
| w3 | 7 |
| w4 | 6 |
| w5 | 5 |
| w6 | 9 |
| w7 | 3 |
| w8 | 9 |
| w9 | 2 |
| w10 | 4 |
| w11 | 10 |
| w12 | 2 |

An intermediate node 61 may be selected based on such degrees of association w1 to w12 extending from the inputs. In other words, a higher one of the degrees of association w1 to w12 may be given a higher weight to select the intermediate node 61. However, the degrees of association w1 to w12 may all have the same value, and the weights to select the intermediate node 61 may all be the same.

Fig. 5 illustrates an example in which combinations of the above-mentioned reference market condition information and reference external environment information, and three or more levels of degrees of association between the combinations and the gain or loss data on share prices of stocks are set.

The reference external environment information includes various data on politics, economy, society, technology, and the like, which are outside companies, for example, GDP, employment statistics, mining and industrial production index, capital investment, labor force survey, and the like.

In the example of Fig. 5, it is assumed that, as input data, the reference market condition information P01 to P03 and reference external environment information P18 to 21 are used, for example. As such input data, intermediate nodes illustrated in Fig. 5 are combinations of the reference external environment information and the reference market condition information. Each intermediate node is further linked to outputs. For each output, gain or loss data on the share price of each stock as an output solution is represented.

The combinations (intermediate node) of the reference market condition information and the reference external environment information are associated with each other through three or more levels of degrees of association for gain or loss data on share prices of stocks, as the output solutions. The reference market condition information and the reference external environment information are arranged on the left side with respect to the degrees of association, and gain or loss data is arranged on the right side with respect to the degrees of association. The degree of association indicates which of the gain or loss data has high association with the reference market condition information and the reference external environment information, which are arranged on the left side. In other words, this degree of association is an index indicating what gain or loss data is likely to be associated with each piece of reference market condition information and reference external environment information, and also indicates the accuracy in selecting the most probable gain or loss data on the share price of a stock from the reference market condition information and the reference external environment information. The share prices will change depending on the actual external environment, in addition to the market condition data. Therefore, the optimum gain or loss data on the share price of a stock will be searched for based on the combinations of the reference market condition information and the reference external environment information.

In the example of Fig. 5, w13 to w22 are illustrated as the degrees of association. These w13 to w22 are represented in 10 levels as listed in Table 1 in which the closer to 10 points, the higher the degree of association between the corresponding combination as an intermediate node and the corresponding output; on the contrary, the closer to 1 point, the lower the degree of association between the corresponding combination as an intermediate node and the corresponding output.

The search apparatus 2 acquires in advance such degrees of association w13 to w22 in three or more levels illustrated in Fig. 5. Specifically, in assessing the actual search solution, the search apparatus 2 accumulates the past data on the reference market condition information and the reference external environment information, and which of the gain or loss data was suitable for these pieces of information, analyzes and examines them, and thus makes the degrees of association illustrated in Fig. 5 in advance.

The analyzing and examining may be performed by artificial intelligence. In such a case, for example, for the reference market condition information P01 and the reference external environment information P20, analysis is performed on the gain or loss data from the past data. For example, for an example of intermediate node 61a, it is linked to the outputs of the gain or loss data A1 and gain or loss data A2, and from the previous cases, the degree of association of w13, which leads to the gain or loss data A1, is set to 7 points, and the degree of association of w14, which leads to the gain or loss data A2, is set to 2 points.

Further, the degrees of association illustrated in Fig. 5 may be those between nodes of an artificial intelligence-based neural network. Specifically, the weighting coefficients for the outputs of the nodes of this neural network corresponds to the above-mentioned degrees of association. Further, the network is not limited to the neural network, and may be of all decision-making factors constituting artificial intelligence.

In the example of the degrees of association illustrated in Fig. 5, a node 61b is a node in which the reference external environment information P18 is combined with the reference market condition information P01 and for which the degree of association for the gain or loss data A3 is w15 and the degree of association for the gain or loss data A5 is w16. A node 61c is a node in which the reference external environment information P19 and P21 are combined with the reference market condition information P02 and for which the degree of association for the gain or loss data A2 is w17 and the degree of association for the gain or loss data A4 is w18.

Such degrees of association are what is called learned data in artificial intelligence. After such learned data is created, when an advice is actually provided from now on, the above learned data will be used. In such a case, in addition to the above-mentioned market condition data, external environment information that reflects external environment in a period of time when stock exchange is to be newly executed is acquired. If the external environment information is, for example, employment statistics information, that data may be directly imported. If there is any other statistical data, that data may be directly imported.

Based on the new market condition information and external environmental information acquired in this way, the gain or loss data on the share price of a stock is searched for to make an optimum advice. In such a case, the degrees of association illustrated in Fig. 5 (Table 1) acquired in advance is referred to. For example, in the case where the acquired new market condition information is the same as or similar to P02 and the external environment information is P21, a node 61d is associated through the degrees of association, and this node 61d is associated with the gain or loss data A3 by w19 and with the gain or loss data A4 by the degree of association w20. In such a case, the gain or loss data A3 with the highest degree of association is selected as the optimum solution. However, it is not essential to select the one with the highest degree of association as the optimum solution, and the gain or loss data A4, which has the lower degree of association but whose association is recognized, may be selected as the optimum solution. Instead of this, it goes without saying that an output solution to which no arrow is connected may be selected, and any other output solution may be selected in any other priority as long as it is based on any degree of association.

Fig. 6 illustrates an example in which combinations of the above-mentioned reference market condition information and reference household budget information, and three or more levels of degrees of association between the combinations and the gain or loss data on share prices of stocks are set.

The reference household budget information includes various data on household budget such as household consumption status survey, household budget data, average working hours per week, savings statistical data, and annual income statistical data.

In the example of Fig. 6, it is assumed that, as input data, the reference market condition information P01 to P03 and reference household budget information P22 to 25 are used, for example. As such input data, intermediate nodes illustrated in Fig. 6 are combinations of the reference market condition information and the reference household budget information. Each intermediate node is further linked to outputs. For each output, gain or loss data on the share price of each stock as an output solution is represented.

The combinations (intermediate node) of the reference market condition information and the reference household budget information are associated with each other through three or more levels of degrees of association for gain or loss data on share prices of stocks, as the output solutions. The reference market condition information and the reference household budget information are arranged on the left side with respect to the degrees of association, and gain or loss data is arranged on the right side with respect to the degrees of association. The degree of association indicates which of the gain or loss data has high association with the reference market condition information and the reference household budget information, which are arranged on the left side. In other words, this degree of association is an index indicating what gain or loss data is likely to be associated with each piece of reference market condition information and reference household budget information, and also indicates the accuracy in selecting the most probable gain or loss data on the share price of a stock from the reference market condition information and the reference household budget information. In addition to the market condition data, there are stocks with share prices fluctuating depending on the actual household conditions. Therefore, the optimum gain or loss data on the share price of a stock will be searched for based on the combinations of the reference market condition information and the reference household budget information.

In the example of Fig. 6, w13 to w22 are illustrated as the degrees of association. These w13 to w22 are represented in 10 levels as listed in Table 1 in which the closer to 10 points, the higher the degree of association between the corresponding combination as an intermediate node and the corresponding output; on the contrary, the closer to 1 point, the lower the degree of association between the corresponding combination as an intermediate node and the corresponding output.

The search apparatus 2 acquires in advance such degrees of association w13 to w22 in three or more levels illustrated in Fig. 6. Specifically, in assessing the actual search solution, the search apparatus 2 accumulates the past data on the reference market condition information and the reference household budget information, and which of the gain or loss data was suitable for these pieces of information, analyzes and examines them, and thus makes the degrees of association illustrated in Fig. 6 in advance.

The analyzing and examining may be performed by artificial intelligence. In such a case, for example, for the reference market condition information P01 and the reference household budget information P24, analysis is performed on the gain or loss data from the past data. For example, for an example of intermediate node 61a, it is linked to the outputs of the gain or loss data A1 and gain or loss data A2, and from the previous cases, the degree of association of w13, which leads to the gain or loss data A1, is set to 7 points, and the degree of association of w14, which leads to the gain or loss data A2, is set to 2 points.

Further, the degrees of association illustrated in Fig. 6 may be those between nodes of an artificial intelligence-based neural network. Specifically, the weighting coefficients for the outputs of the nodes of this neural network corresponds to the above-mentioned degrees of association. Further, the network is not limited to the neural network, and may be of all decision-making factors constituting artificial intelligence.

In the example of the degrees of association illustrated in Fig. 6, a node 61b is a node in which the reference household budget information P22 is combined with the reference market condition information P01 and for which the degree of association for the gain or loss data A3 is w15 and the degree of association for the gain or loss data A5 is w16. A node 61c is a node in which the reference household budget information P23 and P25 are combined with the reference market condition information P02 and for which the degree of association for the gain or loss data A2 is w17 and the degree of association for the gain or loss data A4 is w18.

Such degrees of association are what is called learned data in artificial intelligence. After such learned data is created, when an advice is actually provided from now on, the above learned data will be used. In such a case, in addition to the above-mentioned market condition data, household budget information that reflects statistical data related to household budgets in a period of time when stock exchange is to be newly executed is acquired. If the household budget information is, for example, data published by any government agency, such as savings statistical data, that data may be directly imported. If there is any other statistical data, that data may be directly imported.

Based on the new market condition information and household budget information acquired in this way, the gain or loss data on the share price of a stock is searched for to make an optimum advice. In such a case, the degrees of association illustrated in Fig. 6 (Table 1) acquired in advance is referred to. For example, in the case where the acquired new market condition information is the same as or similar to P02 and the household budget information is P25, a node 61d is associated through the degrees of association, and this node 61d is associated with the gain or loss data A3 by w19 and with the gain or loss data A4 by the degree of association w20. In such a case, the gain or loss data A3 with the highest degree of association is selected as the optimum solution. However, it is not essential to select the one with the highest degree of association as the optimum solution, and the gain or loss data A4, which has the lower degree of association but whose association is recognized, may be selected as the optimum solution. Instead of this, it goes without saying that an output solution to which no arrow is connected may be selected, and any other output solution may be selected in any other priority as long as it is based on any degree of association.

Note that, as an alternative to the reference household budget information illustrated in Fig. 6, reference real estate information that reflects statistical data related to real estates in a detection period of the past market conditions may be used as input data. The detailed configuration in such a case will be omitted by replacing the reference household budget information with the reference real estate information and replacing the household budget information with the real estate information.

Used in such a case will be three or more levels of degrees of association between combinations of the reference market condition information and the reference real estate information and the above-mentioned gain or loss data on share prices of stocks. The nodes 61 will define the three or more levels of degrees of association between combinations of the reference market condition information and the reference real estate information and the above-mentioned gain or loss data on share prices of stocks.

The reference real estate information includes all information about real estates such as office vacancy rate, tsubo unit price, rent market price, land price, and statistical data related to vacant houses.

In making such degrees of association and providing an advice on stock exchange, real estate information that reflects the statistical data related to real estates in a period of time when stock exchange is to be newly executed is obtained, and an advice on stocks in stock exchange is provided based on three or more levels of degrees of association between combinations of reference real estate information that is the same as or similar to this real estate information and the reference market condition information and gain or loss data on share prices of stocks.

Fig. 7 illustrates an example in which combinations of the above-mentioned reference market condition information and reference expert opinion information, and three or more levels of degrees of association between the combinations and the gain or loss data on share prices of stocks are set.

The reference expert opinion information means all information that indicates an expert opinion on the increase or decrease in stocks, and includes, for example, expert comments, observation, or the like on share price forecasts and reasons for increase or decrease in stocks, which are published in analyst reports and newspaper articles.

In the example of Fig. 7, it is assumed that, as input data, the reference market condition information P01 to P03 and reference expert opinion information P26 to 29 are used, for example. As such input data, intermediate nodes illustrated in Fig. 7 are combinations of the reference market condition information and the reference expert opinion information. Each intermediate node is further linked to outputs. For each output, gain or loss data on the share price of each stock as an output solution is represented.

The combinations (intermediate node) of the reference market condition information and the reference expert opinion information are associated with each other through three or more levels of degrees of association for gain or loss data on share prices of stocks, as the output solutions. The reference market condition information and the reference expert opinion information are arranged on the left side with respect to the degrees of association, and gain or loss data is arranged on the right side with respect to the degrees of association. The degree of association indicates which of the gain or loss data has high association with the reference market condition information and the reference expert opinion information, which are arranged on the left side. In other words, this degree of association is an index indicating what gain or loss data is likely to be associated with each piece of reference market condition information and reference expert opinion information, and also indicates the accuracy in selecting the most probable gain or loss data on the share price of a stock from the reference market condition information and the reference expert opinion information. Share price fluctuations may correlate with actual expert opinion in addition to the market condition data. Therefore, the optimum gain or loss data on the share price of a stock will be searched for based on the combinations of the reference market condition information and the reference expert opinion information.

In the example of Fig. 7, w13 to w22 are illustrated as the degrees of association. These w13 to w22 are represented in 10 levels as listed in Table 1 in which the closer to 10 points, the higher the degree of association between the corresponding combination as an intermediate node and the corresponding output; on the contrary, the closer to 1 point, the lower the degree of association between the corresponding combination as an intermediate node and the corresponding output.

The search apparatus 2 acquires in advance such degrees of association w13 to w22 in three or more levels illustrated in Fig. 7. Specifically, in assessing the actual search solution, the search apparatus 2 accumulates the past data on the reference market condition information and the reference expert opinion information, and which of the gain or loss data was suitable for these pieces of information, analyzes and examines them, and thus makes the degrees of association illustrated in Fig. 7 in advance.

The analyzing and examining may be performed by artificial intelligence. In such a case, for example, for the reference market condition information P01 and the reference expert opinion information P28, analysis is performed on the gain or loss data from the past data. For example, for the example of an intermediate node 61a, it is linked to the outputs of the gain or loss data A1 and gain or loss data A2, and from the previous cases, the degree of association of w13, which leads to the gain or loss data A1, is set to 7 points, and the degree of association of w14, which leads to the gain or loss data A2, is set to 2 points.

Further, the degrees of association illustrated in Fig. 7 may be those between nodes of an artificial intelligence-based neural network. Specifically, the weighting coefficients for the outputs of the nodes of this neural network corresponds to the above-mentioned degrees of association. Further, the network is not limited to the neural network, and may be of all decision-making factors constituting artificial intelligence.

In the example of the degrees of association illustrated in Fig. 7, a node 61b is a node in which the reference expert opinion information P26 is combined with the reference market condition information P01 and for which the degree of association for the gain or loss data A3 is w15 and the degree of association for the gain or loss data A5 is w16. A node 61c is a node in which the reference expert opinion information P27 and P29 are combined with the reference market condition information P02 and for which the degree of association for the gain or loss data A2 is w17 and the degree of association for the gain or loss data A4 is w18.

Such degrees of association are what is called learned data in artificial intelligence. After such learned data is created, when an advice is actually provided from now on, the above learned data will be used. In such a case, in addition to the above-mentioned market condition data, expert opinion information that reflects expert opinions announced in a period of time when stock exchange is to be newly executed is acquired. If the expert opinion information includes, for example, an expert opinion expressed in a newspaper article, that data may be directly imported.

Based on the new market condition information and expert opinion information acquired in this way, the gain or loss data on the share price of a stock is searched for to make an optimum advice. In such a case, the degrees of association illustrated in Fig. 7 (Table 1) acquired in advance is referred to. For example, in the case where the acquired new market condition information is the same as or similar to P02 and the expert opinion information is P29, a node 61d is associated through the degrees of association, and this node 61d is associated with the gain or loss data A3 by w19 and with the gain or loss data A4 by the degree of association w20. In such a case, the gain or loss data A3 with the highest degree of association is selected as the optimum solution. However, it is not essential to select the one with the highest degree of association as the optimum solution, and the gain or loss data A4, which has the lower degree of association but whose association is recognized, may be selected as the optimum solution. Instead of this, it goes without saying that an output solution to which no arrow is connected may be selected, and any other output solution may be selected in any other priority as long as it is based on any degree of association.

Fig. 8 illustrates an example in which combinations of the above-mentioned reference market condition information and reference natural environment information, and three or more levels of degrees of association between the combinations and the gain or loss data on share prices of stocks are set.

The reference natural environment information means all information about the natural environment such as disaster data, temperature data, precipitation data, wind direction data, humidity data, and the like, and is, for example, data on the past natural environment announced by the Meteorological Agency, or data on the past natural environment announced by private companies or individuals.

In the example of Fig. 8, it is assumed that, as input data, the reference market condition information P01 to P03 and reference natural environment information P30 to 33 are used, for example. As such input data, intermediate nodes illustrated in Fig. 8 are combinations of the reference natural environment information and the reference market condition information. Each intermediate node is further linked to outputs. For each output, gain or loss data on the share price of each stock as an output solution is represented.

The combinations (intermediate node) of the reference market condition information and the reference natural environment information are associated with each other through three or more levels of degrees of association for gain or loss data on share prices of stocks, as the output solutions. The reference market condition information and the reference natural environment information are arranged on the left side with respect to the degrees of association, and gain or loss data is arranged on the right side with respect to the degrees of association. The degree of association indicates which of the gain or loss data has high association with the reference market condition information and the reference natural environment information, which are arranged on the left side. In other words, this degree of association is an index indicating what gain or loss data is likely to be associated with each piece of reference market condition information and reference natural environment information, and also indicates the accuracy in selecting the most probable gain or loss data on the share price of a stock from the reference market condition information and the reference natural environment information. Share price fluctuations may correlate with actual expert opinion in addition to the market condition data. Therefore, the optimum gain or loss data on the share price of a stock will be searched for based on the combinations of the reference market condition information and the reference natural environment information.

In the example of Fig. 8, w13 to w22 are illustrated as the degrees of association. These w13 to w22 are represented in 10 levels as listed in Table 1 in which the closer to 10 points, the higher the degree of association between the corresponding combination as an intermediate node and the corresponding output; on the contrary, the closer to 1 point, the lower the degree of association between the corresponding combination as an intermediate node and the corresponding output.

The search apparatus 2 acquires in advance such degrees of association w13 to w22 in three or more levels illustrated in Fig. 8. Specifically, in assessing the actual search solution, the search apparatus 2 accumulates the past data on the reference market condition information and the reference natural environment information, and which of the gain or loss data was suitable for these pieces of information, analyzes and examines them, and thus makes the degrees of association illustrated in Fig. 8 in advance.

The analyzing and examining may be performed by artificial intelligence. In such a case, for example, for the reference market condition information P01 and the reference natural environment information P32, analysis is performed on the gain or loss data from the past data. For example, for the example of an intermediate node 61a at which the reference market condition information P01 and the reference natural environment information P32 are linked, it is linked to the outputs of the gain or loss data A1 and gain or loss data A2, and from the previous cases, the degree of association of w13, which leads to the gain or loss data A1, is set to 7 points, and the degree of association of w14, which leads to the gain or loss data A2, is set to 2 points.

Further, the degrees of association illustrated in Fig. 8 may be those between nodes of an artificial intelligence-based neural network. Specifically, the weighting coefficients for the outputs of the nodes of this neural network corresponds to the above-mentioned degrees of association. Further, the network is not limited to the neural network, and may be of all decision-making factors constituting artificial intelligence.

In the example of the degrees of association illustrated in Fig. 8, a node 61b is a node in which the reference natural environment information P30 is combined with the reference market condition information P01 and for which the degree of association for the gain or loss data A3 is w15 and the degree of association for the gain or loss data A5 is w16. A node 61c is a node in which the reference natural environment information P31 and P33 are combined with the reference market condition information P02 and for which the degree of association for the gain or loss data A2 is w17 and the degree of association for the gain or loss data A4 is w18.

Such degrees of association are what is called learned data in artificial intelligence. After such learned data is created, when an advice is actually provided from now on, the above learned data will be used. In such a case, in addition to the above-mentioned market condition data, natural environment information that reflects information on the natural environment in a period of time when stock exchange is to be newly executed is acquired. In the natural environment information, data on the natural environment announced by the Meteorological Agency, private companies, or individuals, or information on sites on which such data is described may be directly imported.

Based on the new market condition information and natural environmental information acquired in this way, the gain or loss data on the share price of a stock is searched for to make an optimum advice. In such a case, the degrees of association illustrated in Fig. 8 (Table 1) acquired in advance is referred to. For example, in the case where the acquired new market condition information is the same as or similar to P02 and the natural environment information is P33, a node 61d is associated through the degrees of association, and this node 61d is associated with the gain or loss data A3 by w19 and with the gain or loss data A4 by the degree of association w20. In such a case, the gain or loss data A3 with the highest degree of association is selected as the optimum solution. However, it is not essential to select the one with the highest degree of association as the optimum solution, and the gain or loss data A4, which has the lower degree of association but whose association is recognized, may be selected as the optimum solution. Instead of this, it goes without saying that an output solution to which no arrow is connected may be selected, and any other output solution may be selected in any other priority as long as it is based on any degree of association.

Fig. 9 illustrates an example in which combinations of the above-mentioned reference market condition information, the above-mentioned reference event information, and also the reference external environment information, and three or more levels of degrees of association between the combinations and the gain or loss data on share prices of stocks are set.

In such a case, as illustrated in Fig. 9, the degrees of association are expressed for a set of combinations of the reference market condition information, the reference event information, and the reference external environment information so that the combinations correspond to nodes 61a to 61e being intermediate nodes as in the case described above.

For example, in Fig. 9, the node 61c is associated with the reference market condition information P02 by the degree of association w3, with the reference event information P15 by the degree of association w7, and with reference external environment information P19 by the degree of association w11. Similarly, the node 61e is associated with the reference market condition information P03 by the degree of association w5, with the reference event information P15 by the degree of association w8, and with reference external environment information P18 by the degree of association w10.

Similarly in the case where such degrees of association are set, the search solutions are accessed based on the acquired new market condition information, event information, and external environment information.

In assessing the search solutions, the degrees of association illustrated in Fig. 9 acquired in advance are referred to. For example, in the case where the acquired market condition information is the same as or similar to the reference market condition information P02, the acquired event information is the reference event information P15, and further the acquired external environment information is the reference external environment information P19, the combination of them corresponds to the node 61c, and this node 61c is associated with the gain or loss data A2 by the degree of association w17 and with the gain or loss data A4 by the degree of association w18. As a result of such degrees of association, a search solution will actually be obtained based on w17 and w18.

For a combination of three or more types of such input parameters, two or more of the reference event information, the reference external environment information, the reference household budget information, the reference real estate information, the reference expert opinion information, and the reference natural environment information may be used for the combination in addition to the reference market condition information.

Further, as the output data, an advice on actual stock trade action (e.g., buy ∘× company, hold ×∘ company) and the like is directly displayed in addition to the gain or loss data on the share prices of stocks, as illustrated in Fig. 10. This advice may be provided including specifying not only a stock which is advised to be bought or sold, but also the specific number of shares. Such an advice may be generated based on the gain or loss data described above. In such a case, it may be advised that if the share price rises in the future, it should be bought, and if the share price falls in the future, it should be sold. Further, in addition to the possibility of return on stock exchange, the advice may include an indication of risk. In this case, as the data to be learned with the input data, it is of course possible to learn the data set with such advice content just included instead of the gain or loss data.

Further, the present invention may be embodied as an automatic stock transaction program that automatically executes stock exchange. In such a case, after gain or loss data is searched for based on the above procedure, the stock with the corresponding share price is automatically bought and sold based on that gain or loss data. In such a case, the system side buys and sells the corresponding stock based on the advice on stock trade action (e.g., buy ∘× company, hold ×∘ company) and the like.

In the above-mentioned degrees of association, each degree of association is expressed by a 10-level evaluation, but it is not limited to this as long as it is expressed by a three or more levels of degree of association, and in other words, it may be 100 levels or 1000 levels as long as it is three or more levels. On the other hand, this degree of association does not include those expressed in two levels, that is, whether or not they are related to each other, either 1 or 0.

According to the present invention having the above-described configuration, anyone can easily search for an optimum stock in stock exchange, without any special skill or experience. Further, according to the present invention, it is possible to determine the search solution with higher accuracy than when performed by a human. Further, configuring the above-mentioned degrees of association by artificial intelligence (neural network or the like) and then learning them makes it possible to further improve the determination/assessment accuracy.

Note that, since the above-mentioned input data and output data are often not exactly the same in the process of learning, the input data and the output data may be classified by type. Specifically, the information P01, P02, ... P15, P16, ..., which make up input data may be classified according to the criteria classified in advance on the system side or the user side depending on the content of the information, and a data set of the classified input data and output data may be created and used for learning.

Further, as illustrated in Fig. 11, reference information U is composed of reference event information, reference external environment information, reference household budget information, reference real estate information, reference expert opinion information, and reference natural environment information, and the like, as well as reference market condition information; reference information V includes reference event information, reference external environment information, reference household budget information, reference real estate information, reference expert opinion information, and reference natural environment information, as well as the reference market condition information with which the reference information U is combined to make degrees of association; and the assessment may be made based on degrees of association between combinations of these pieces of information. The resulting output solution corresponds to each creditworthiness described above.

In this case, an output obtained for the reference information U may be used as input data as it is, and may be associated with an output through the intermediate node 61 at which the reference information U is combined with the reference information V. For example, for the reference information U, an output solution is output, and may then be used as an input as it is to use the degrees of association between the reference information U and other reference information V and to search for an output.

Further, the degrees of association illustrated in Fig. 3 may be those between nodes of an artificial intelligence-based neural network. Specifically, the weighting coefficients for the outputs of the nodes of this neural network corresponds to the above-mentioned degrees of association. Further, the network is not limited to the neural network, and may be of all decision-making factors constituting artificial intelligence.

In such a case, as illustrated in Fig. 12, machine learning may be executed in which reference account settlement information is input as input data, each creditworthiness is output as output data, and at least one or more hidden layers are interposed between the input nodes and the output nodes. On the contrary, each creditworthiness may be input and the reference account settlement information may be output.

Further, the present invention has a feature that the optimum solution is searched for through the degrees of association set in three or more levels. The degree of association can be described by, for example, a numerical value from 0 to 100% instead of the above-mentioned 10 levels, but the degree of association is not limited to this, and any level can be used as long as it can be described by a numerical value of three or more levels.

By determining the stock in stocks with higher profit and low risk based on the degree of association expressed by a numerical value of three or more levels, in the situation where there are multiple possible candidates for the search solution, the candidates can be displayed in descending order of their degrees of association.

In addition to this, according to the present invention, it is possible to perform determination without overlooking even a determination/assessment result of output having an extremely low degree of association such as 1%. It is possible to cause the user to pay attention that even a determination/assessment result with an extremely low degree of association is involved as a slight sign and may be useful as the determination/assessment result once every tens or hundreds of times.

Further, the present invention has an advantage that the search policy can be determined depending on how to set a threshold value by performing the search based on such degrees of association of three or more levels. If the threshold value is lowered, a determination/assessment result even with the above-mentioned degree of association being 1% can be picked up without omission, whereas there is a low possibility to detect a more appropriate determination/assessment result suitably, and a lot of noise may be picked up. On the other hand, if the threshold value is raised, there is a high possibility to detect the optimum search solution with high probability, whereas typical degrees of association are as low as they are not required to be taken into consideration but a suitable solution that appears at least once every tens or hundreds of times may be overlooked. It is possible to decide which one of the threshold settings to prioritize based on the ideas of the user side and the system side, but it is possible to increase the degree of freedom in selecting such a point to prioritize.

Further, in the present invention, the above-mentioned degrees of association may be updated. This update may reflect information provided via a public communication network such as the Internet. When knowledge, information, and data such as event information, external environment information, household budget information, real estate information, expert opinion information, and natural environment information are acquired in addition to the market condition information, the corresponding degree of association is increased or decreased according to these pieces of information.

In other words, this update corresponds to learning in the sense of artificial intelligence. Since new data is acquired and it is reflected in the learned data, this is just a learning act.

Further, this update of the degrees of association may be not based on the information available from the public communication network, and may be artificial or automatic update performed by the system side or the user side based on the contents of expert research data and papers, conference presentations, newspaper articles, books, and the like. Artificial intelligence may be utilized in such update processing.

Further, the process of first creating the learned model and the above-mentioned update may use not only supervised learning but also unsupervised learning, deep learning, reinforcement learning, and the like. In the case of unsupervised learning, instead of reading and learning a data set of input data and output data, information corresponding to the input data may be read and learned to make the degrees of association related to the output data by itself from the resulting information.

### [Reference Signs List]

- 1: Stock exchange information display system
- 2: Search apparatus
- 21: Internal bus
- 23: Display unit
- 24: Control unit
- 25: Operation unit
- 26: Communication unit
- 27: Estimation unit
- 28: Storage unit
- 61: Node

## Claims

1. A stock exchange information display program for displaying information about a stock in stock exchange, the stock exchange information display program causing a computer to execute:
an information acquisition step of acquiring market condition information about a market condition in a period of time when stock exchange is to be newly executed; and
a display step of using a degree of association between reference market condition information about past market conditions acquired in advance and gain or loss data on a share price of each stock at a later time point relative to in the past market conditions, the degree of association being represented in three or more levels, so as to preferentially display gain or loss data on a share price of each stock having a higher degree of association between the reference market condition information corresponding to the market condition information acquired at the information acquisition step and the gain or loss data on the share price of each stock, the degree of association being represented in three or more levels.

2. The stock exchange information display program according to claim 1, wherein
the information acquisition step includes acquiring event information that reflects an event that occurred in the period of time when stock exchange is to be newly executed, and
the display step includes using a degree of association between a combination of the reference market condition information and reference event information that reflects an event occurred in a detection period of the past market conditions and the gain or loss data on the share price of each stock, the degree of association being represented in three or more levels, so as to preferentially display the gain or loss data on the share price of each stock having a higher degree of association between the combination of the reference event information corresponding to the event information acquired at the information acquisition step and the reference market condition information and the gain or loss data on the share price of each stock, the degree of association being represented in three or more levels.

3. The stock exchange information display program according to claim 1, wherein
the information acquisition step includes acquiring external environment information that reflects external environment in the period of time when stock exchange is to be newly executed, and
the display step includes using a degree of association between a combination of the reference market condition information and reference external environment information that reflects external environment in a detection period of the past market conditions and the gain or loss data on the share price of each stock, the degree of association being represented in three or more levels, so as to preferentially display the gain or loss data on the share price of each stock having a higher degree of association between the combination of the reference external environment information corresponding to the external environment information acquired at the information acquisition step and the reference market condition information and the gain or loss data on the share price of each stock, the degree of association being represented in three or more levels.

4. The stock exchange information display program according to claim 1, wherein
the information acquisition step includes acquiring household budget information that reflects statistical data related to household budget in the period of time when stock exchange is to be newly executed, and
the display step includes using a degree of association between a combination of the reference market condition information and reference household budget information that reflects statistical data related to household budget in a detection period of the past market conditions and the gain or loss data on the share price of each stock, the degree of association being represented in three or more levels, so as to preferentially display the gain or loss data on the share price of each stock having a higher degree of association between the combination of the reference household budget information corresponding to the household budget information acquired at the information acquisition step and the reference market condition information and the gain or loss data on the share price of each stock, the degree of association being represented in three or more levels.

5. The stock exchange information display program according to claim 1, wherein
the information acquisition step includes acquiring real estate information that reflects statistical data related to real estate in the period of time when stock exchange is to be newly executed, and
the display step includes using a degree of association between a combination of the reference market condition information and reference real estate information that reflects statistical data related to real estate in a detection period of the past market conditions and the gain or loss data on the share price of each stock, the degree of association being represented in three or more levels, so as to preferentially display the gain or loss data on the share price of each stock having a higher degree of association between the combination of the reference real estate information corresponding to the real estate information acquired at the information acquisition step and the reference market condition information and the gain or loss data on the share price of each stock, the degree of association being represented in three or more levels.

6. The stock exchange information display program according to claim 1, wherein
the information acquisition step includes acquiring expert opinion information that reflects an expert opinion announced in the period of time when stock exchange is to be newly executed, and
the display step includes using a degree of association between a combination of the reference market condition information and reference expert opinion information that reflects an expert opinion announced in a detection period of the past market conditions and the gain or loss data on the share price of each stock, the degree of association being represented in three or more levels, so as to preferentially display the gain or loss data on the share price of each stock having a higher degree of association between the combination of the reference expert opinion information corresponding to the expert opinion information acquired at the information acquisition step and the reference market condition information and the gain or loss data on the share price of each stock, the degree of association being represented in three or more levels.

7. The stock exchange information display program according to claim 1, wherein
the information acquisition step includes acquiring natural environment information that reflects information on natural environment in the period of time when stock exchange is to be newly executed, and
the display step includes using a degree of association between a combination of the reference market condition information and reference natural environment information that reflects information on natural environment in a detection period of the past market conditions and the gain or loss data on the share price of each stock, the degree of association being represented in three or more levels, so as to preferentially display the gain or loss data on the share price of each stock having a higher degree of association between the combination of the reference natural environment information corresponding to the natural environment information acquired at the information acquisition step and the reference market condition information and the gain or loss data on the share price of each stock, the degree of association being represented in three or more levels.

8. A stock exchange information display system that displays information about a stock in stock exchange, the stock exchange information display system comprising:
an information acquisition unit that acquires market condition information about a market condition in a period of time when stock exchange is to be newly executed; and
a display unit that uses a degree of association between reference market condition information about past market conditions acquired in advance and gain or loss data on a share price of each stock at a later time point relative to in the past market conditions, the degree of association being represented in three or more levels, so as to preferentially display gain or loss data on a share price of each stock having a higher degree of association between the reference market condition information corresponding to the market condition information acquired by the information acquisition unit and the gain or loss data on the share price of each stock, the degree of association being represented in three or more levels.
